Europäisches Patentamt

(19) European Patent Office

Office européen des brevets

(11) Publication number: **0 046 101**

**A2**

(12) **EUROPEAN PATENT APPLICATION**

(21) Application number: **81401200.1**

(22) Date of filing: **28.07.81**

(51) Int. Cl.³: **G 01 V 1/40**
**G 01 N 29/00**

(30) Priority: **31.07.80 US 174396**

(43) Date of publication of application:
**17.02.82 Bulletin 82/7**

(84) Designated Contracting States:
**DE FR GB IT NL**

(71) Applicant: **Schlumberger Limited**
**277 Park Avenue**
**New York, N.Y. 10017(US)**

(84) Designated Contracting States:
**DE GB NL**

(71) Applicant: **SOCIETE DE PROSPECTION ELECTRIQUE**
**SCHLUMBERGER**
**42,rue Saint-Dominique**
**F-75340 Paris Cedex 07(FR)**

(84) Designated Contracting States:
**FR IT**

(72) Inventor: **Plona, Thomas J.**
**12 Jefferson Drive**
**New Milford Connecticut 06776(US)**

(74) Representative: **Chareyron, Lucien et al,**
**Schlumberger Limited Service Brevets 42, rue**
**Saint-Dominique**
**F-75340 Paris Cedex 07(FR)**

(54) **System for borehole logging by detection of slow compressional waves.**

(57) There are provided, in accordance with principles of the present invention, methods and apparatus for determining the actual or relative permeability of subsurface earth formations, which methods include the steps of applying sonic energy to the surface of a formation to cause sonic wave propagation in the formation and detecting and measuring the properties of a slow compressional wave propagating near the location where the sonic energy is applied. The application of sonic energy is accomplished through a transmitting medium, abutting the formation to be investigated, in a manner such that the ratio of the sonic speed in the transmitting medium to the sonic speed of the headwave in the formation is less than one so as to yield a real valued incident angle of excitation.

FIG.1

60.553

SYSTEM FOR BOREHOLE LOGGING BY
DETECTION OF SLOW COMPRESSIONAL WAVES

BACKGROUND OF THE INVENTION

The present invention relates to methods and apparatus for investigating the permeability of earth formations traversed by a borehole, and more particularly to novel and improved methods and apparatus for determining the relative or actual permeabilities of the formations by obtaining indications of the velocity and attenuation of a slow compressional wave propagating in the formations.

It has been previously proposed in the prior art literature by, among others, M. A. Biot, in an article entitled, "Theory of Propagation of Elastic Waves in a Fluid-Saturated Porous Solid" and published in the Journal of Acoustical Society of America, Vol. 28, page 168-191 (1956), that a sonic wave propagation model for fluid-saturated porous media should include, in addition to the expected compressional and shear waves, an additional wave which may be called a second bulk or slow compressional wave propagating at a velocity which is slower than that of both the compressional and shear waves. The propagation model of Biot also predicted that properties of this slow compressional wave would be strongly dependent on the relative motion between the fluid and the solid constituents of the porous media and thus related to the permeability of the media. The slow compressional wave is difficult to detect, perhaps due to, inter alia, the fact that the velocity of that suggested slow compressional wave is usually less than the sonic speed in a fluid medium. Accordingly, prior art techniques employed to derive an indication of formation permeability employed methods which did not involve the detection of a slow compressional wave, as further explained below.

Heretofore, information relating to the location and permeability of subsurface earth formations has been obtained by electrical logging methods which are based at least in part on the electrokinetic potential phenomenon that occurs when relative movement is induced between a formation and the fluid contained in the matrices of the formation material. For example, in U.S. Pat. No. 2,814,017, issued November 19, 1957 to Henri-Georges Doll and assigned to the assignee of the present invention, methods are described for investigating the permeabilities of earth formations by observing the differences in phase between periodic pressure waves passed through the formations and the potentials generated by the oscillatory motion of the formation fluid caused by these pressure waves. Conversely, a periodically varying electric current was suggested to be used to generate oscillatory motion of the formation fluid, which in turn generated periodic pressure waves in the formation. Measurements were then to be readily made of the phase displacement between the generating and the generated quantities and a direct indication of the relative permeability of the formation thereby obtained.

In U.S. Patent No. 3,599,085, to A. Semmlink, also assigned to the assignee of the present invention, the application of low-frequency sonic energy to a formation surface is proposed so as to create large electrokinetic, or streaming, pulses in the immediate area of the sonic generator. The streaming potential pulses generate periodic movements of the formation fluid which produce detectable transient electrokinetic potentials of the same frequency as the applied sonic energy and having magnitudes at any given location directly proportional to the velocity of the fluid motion at that location and inversely proportional to the square of the distance from the locus of the streaming potential pulse. Since the fluid velocity was found to fall off from its initial value with increasing length of travel through the formation at a rate dependent in part upon the permeability of the formation rock, the magnitude of the electrokinetic potential at any given distance from the streaming pulse provided an indication of formation permeability.

Although these above-mentioned methods yield useful data relating to the permeability of subsurface formation and, accordingly, have been significant contributions to the art, it is desirable to obtain permeability information through other methods. More particularly, formation permeability information obtained through the measurement of the velocity and attenuation of a slow compressional wave generated in a formation by sonic excitation at the formation surface, effects the realization of significant advantages including elimination of the need for borehole electrodes or pressure probes.

SUMMARY OF THE INVENTION

One aspect of the present invention is attained by a method for investigating a characteristic property of a material, comprising the steps of: effecting the propagation of a sonic slow compressional wave in said material; monitoring said material to determine a property of propagation of said slow wave.

Another aspect of the invention includes an apparatus for investigating a property of a material, comprising: means for exciting a slow compressional sonic wave to propagate in said material; and means for detecting said slow wave.

BRIEF DESCRIPTION OF THE DRAWINGS

In the drawings:

FIG. 1 is a schematic diagram of suitable apparatus for investigating the permeability of earth formations traversed by a borehole in accordance with the present invention;

FIG. 2 is a graph of a acoustic wave propagating through a porous medium and including a slow compressional component; and

FIG. 3 is a cross-section of a pad device forming a portion of the apparatus of FIG. 1, and showing the relative positions of acoustic transmitters and receivers.

-5-

## DESCRIPTION OF A REPRESENTATIVE EMBODIMENT

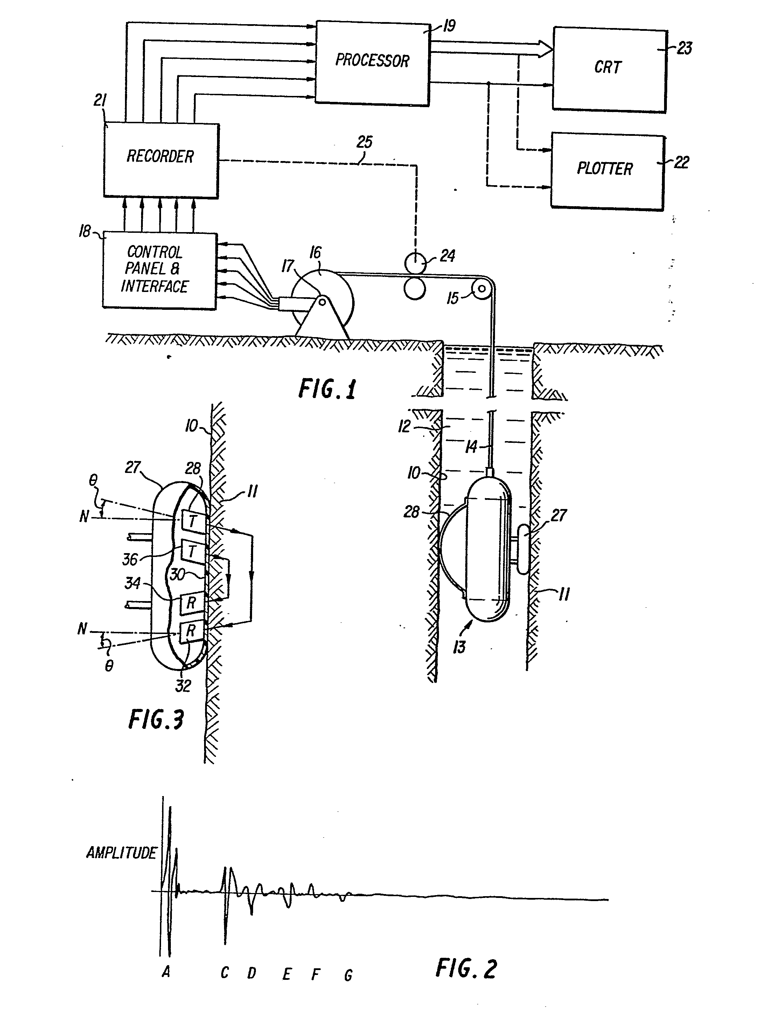

Referring particularly to FIG. 1, a representative apparatus for investigating the permeability of subsurface earth formations in accordance with the present invention is shown disposed in an uncased borehole 10 traversing a subsurface earth formation 11 and containing a borehole fluid 12. The apparatus comprises a downhole tool 13 the mechanical and electrical control of which may be accomplished with a multiconductor cable 14 which passes from the downhole tool 13 through the borehole to a sheave wheel 15 at the surface and then to a suitable drum and winch mechanism 16. Electrical connections between various conductors of the multiconductor cable and various electrical circuits at the surface of the earth are accomplished by means of a suitable multi-element slip-ring and brush contact assembly 17. In this manner, the signals which originate from the downhole investigating tool are supplied to a control panel 18 which in turn supplies signals to a processor 19 and a recorder 21. A suitable signal generator (not shown) supplies current to the downhole tool and to signal processing circuits forming part of processor 19, located at the surface. More details of such circuits are described in U.S. Patent No. 3,237,153, issued to R. Blizard on February 22, 1966.

Signals obtained from the downhole device may be recorded graphically by a plotter 22 and displayed on a CRT 23. In addition, the signals may be processed to obtain discrete samples which may then be recorded on digital tape. A suitable digital tape recorder is described in U. S. Patent No. 3,648,278 issued to G. K. Miller, et al on March 7, 1972. The signals may also be sampled by driving sampling devices, such as those described in the above-mentioned Miller, et al patent, by the cable motion as measured at the surface. For example, a cable length measuring wheel 24 may be used in controlling the signal processing, sampling and recording functions as indicated by signal line 25. Therefore, each sample of a measured signal corresponds to one increment in depth and displacements determined between such sample signals are indicative of depth displacements.

The measured signals or samples thereof may also be transmitted directly to a computer. Such a computer may be located at the well site. Alternatively, the signals may be transmitted via a transmission system to a computer at a remote location. One transmission system which may be used is described in U.S. Patent 3,599,156 issued to G. K. Miller, et al on August 10, 1971.

The recorded or transmitted signals may be processed as digital measurements by a general purpose digital computing apparatus properly programmed in a manner to perform the processes described herein or by special purpose computing apparatus composed of modules arranged to accomplish the described steps to accomplish the same process. The signals may also be processed directly at the well site, using conventional digital computing apparatus forming part of the pocessor 19 when properly programmed and interfaced to signal conversion means (not shown). One such computing apparatus is the Model PDP-11/45 computer obtainable from the Digital Equipment Corporation. Suppliers of such equipment may also supply signal conditioning circuits and signal conversion means suitable for conditioning and converting analog signals to digital samples for subsequent digital storage and processing. Further, such computing apparatus ordinarily include a memory for storing data and information such as parameters, coefficients and controls used and generated by the processing steps.

With reference again to FIG 1, the sonic well tool 13 comprises an elongated housing 26 having a pad device 27 for engaging the surface of the formation 11 and means, such as a diametrically disposed, wall-engaging bow spring 28, for resiliently urging the housing 22 and the pad device 27 toward the opposite borehole wall to hold the pad device 27 in firm engagement with the surface of the formation.

The pad device 27 preferably conforms generally to the contour of the borehole wall and is supported on the housing 26 by extensible members so as to be selectably moveable between an outboard, wall-engaging position and an inboard, retracted position. In the illustrative embodiment shown, the logging device is maintained at the inboard position during movement of the tool 13 in the borehole and is caused to be extended from the housing into engagement with a formation to be tested by activation of a hydraulic system, for example, from the ground surface. The signals received from the down hole tool 13 may be processed at the surface through the employment of conventional techniques for processing wave train signals so as to extract information relating to the slow compressional wave. One such technique is described in a paper entitled, "Permeability profiles from acoustic logging", by J. J. Staal, et al. and presented at the 52nd Annual Fall Technical Conference and Exhibition of the Society of Petroleum Engineers of AIME, October 9-12, 1977.

It will be found appropriate at this point to discuss some of inventor's experiments which led to the direct observation of a slow or second bulk compressional wave which propagates at speeds approximately 25% of the speed of the normal bulk compressional wave in a fluid-saturated porous medium. These experiments were described in more detail in a paper entitled, "Observation of a Second Bulk Compressional Wave in a Porous Medium at Ultrasonic Frequencies", and published February 15, 1980 in the Applied Physics Letter, Vol. 36, No. 4, page 259.

An ultrasonic immersion technique was used to generate the bulk modes in a solid plate based on the concept of mode conversion and refraction at liquid-solid interfaces. Using this technique, sound speeds of the normal compressional wave, the shear wave and a slow compressional wave were determined. The pulsed ultrasonic system incorporated commercially available pulser/receiver electronics and nondestructive testing type broadband transducers. The transducers used included a pair of 28.6 mm diameter, 500 KHz transducers and a pair of 25.4 mm diameter, 2.25 MHz transducers. Total acoustic path lengths between transmitter/receiver were typically 130 sec in water. The velocities were determined from the measured arrival times of the appropriate pulses on an oscilloscope and a corresponding measurement of the angle of incidence. Uncertainty in the measured speeds was about 3%.

The solid samples used were water-saturated disks composed of sintered glass spheres. Aggregates of solid spheres of diameters between .21 and .29 mm were sintered at temperatures between $700^{\circ}$ and $740^{\circ}$ C. Four samples

of varying porosity were fabricated by controlling the maximum oven temperature and the total time at that temperature. The samples were ground to achieve plane parallel faces and water-saturated using a vacuum impregnation technique. Sample thickness varied between 14 and 21 mm and sample diameters between 90 and 100 mm. The anisotropy of the samples was tested by the measurement of the fast compressional speed in three perpendicular directions on one of the samples. The speeds were identical to within experimental uncertainty. The bulk glass had a density of $2.48 gm/cm^3$, compressional speed of 5.69 km/sec and a shear speed of 3.46 km/sec as calculated from the manufacturer's modulus data.

The existence of a second bulk compressional wave in a porous solid was demonstrated by observing the received pulses recorded after propagating through the water/porous solid/water system at four different angles of incidence. For the case of normal incidence, only compressional waves are generated in an isotropic solid. One would have anticipated, therefore, an echo pattern consisting of a direct, fast compressional and then, equi-spaced in time, a set of multiple reflections. Pulses A, C, E and G in Fig. 2 are illustrative of these arrivals. However, pulses D and F are additional arrivals not observed in non-porous solids. Pulse D represents an additional bulk wave traveling through the porous solid at a velocity much less than the normal compressional wave. Pulse F arrives later than pulse D by a time corresponding to the time difference between pulse A and C. Thus pulse F (which is also inverted with respect to pulse D) corresponds to a twice reflected path in the solid where the arrival travels once through the solid at the slow speed and twice at the fast compressional speed. This was found to be significant since it demonstrates that mode conversion between this additional bulk wave and the normal compressional wave occurs at the boundaries. Therefore, the existence of the first additional arrival, pulse D, and the mode converted arrival, pulse F, both at normal incidence are evidence that this second bulk wave is primarily a compressional vibration.

In these experiments, the observed "extra" arrival was found to reflect and refract in a manner consistent with a low speed compressional wave in the porous solid. The identification of this observed "extra" arrival as a bulk wave and not a miscellaneous echo or scattering path was made by systematically perturbing (via translations) all combinations of the source, receiver and sample relative positions and using short time pulses. If the "extra" arrival was not a bulk wave, its timing relationship to the known shear and compressional bulk waves would have to be dependent on such source, receiver or sample translation. This type of dependency was never observed. In addition, this type of "extra" arrival was never observed in samples of similar dimensions made from such non-porous material as aluminum, stainless steel or Plexiglas.

With reference now to FIG. 3, a cross-section of the pad device 27 is shown in engagement with the borehole wall 10. Sonic generating means 28 such as a piezoelectric transducer is shown mounted in the face of the pad device 27 with a shield or layer of transmitting medium 30 being interposed between the transducer 28 and the borehole wall 10. The transducer 28 may be energized by a suitable source of electrical energy (not shown) located in the elongated housing 26.

The transmitting medium 30 is chosen such that the ratio of the sonic speed in the transmitting medium 30 to the sonic speed of the headwave in the formation, approximately 1km/sec, is less than one so as to yield a real valued incident angle of excitation. A suitable material for the transmitting medium, for example, is a tungsten-vinyl composite material having a sonic velocity of 0.82 km/sec at 40 volume percent of tungsten. Reference may be had to an article entitled, "Ultrasonic Measurement of Some Mineral Filled Plastics" by Sidney Lees and Carel Davidson published in IEEE Transactions of Sonics and Ultrasonics, Vol. SU-24, No. 3, dated May 1977. Of course other suitable materials may be employed so long as the given relationship between the sonic speed in the formations and in the material is satisfied.

In FIG. 3, one arrangement of a transducer array in a pad 27 is shown such that when the pad is in a radially extended position for acoustically logging the formations, the pad is substantially against the wall of the borehole 10 to thereby emit and receive acoustic energy directly from the formations. In accordance with the invention, the pad 27 contains the transmitter 28 which is disposed longitudinally from an acoustic receiver 32 both of which abut the transmitting medium 30. When the transmitter 28 is electrically pulsed to yield an acoustic output having a frequency within the band of say, 20 KHz to 5 MHz, acoustic energy is transmitted from the transmitter 28 in a longitudinal direction through the formations. A portion of the acoustic energy transmitted through the formations reenters the borehole, as depicted by the arrowheaded lines, where it is detected by the receiver 32 which develops electrical signals corresponding to intensity variations of the received acoustic energy.

Owing to the existence of the transmitting medium 30, the acoustic waves received by receiver 32 will include a component due to the propagation of a slow compressional wave in the formations. The received waves can then be processed to isolate that component and to derive a measurement of the permeability of the formations therefrom.

It will be appreciated that in order to enhance the transmission and pickup of a slow compressional wave the transmitter 28 and receiver 32 may be oriented, within the pad device 27, relative to the borehole wall 10 so as to respectively launch and receive acoustic waves substantially along an angle $\Theta$ relative to normal planes N which intersect a longitudinal axis of the pad device 27, as shown in FIG. 3.

The angle $\Theta$, which lies between the bounds of zero and 90 degrees, advantageously satisfies the following relationship relating to acoustic velocity:

$$\Theta = \text{Sin-1} \quad \frac{\text{velocity in the transmitting medium}}{\text{velocity of the headwave in the formation}}$$

An additional receiver 34 may be provided to derive a differential measurement of the acoustic propagation velocity and attenuation which would provide for a lessened dependence of the measurement on borehole factors or to provide indications of the rate of fall-off in the amplitude of the slow compressional wave in the formations. Also, an additional transmitter 36 may be provided which can either have the same operating characteristics as the transmitter 28, so as to enable the obtaining of repeat measurements at any one depth of the borehole, or different operating characteristics from those of transmitter 28, such as a different frequency characteristic, to enable the obtaining of a permeability measurement at different lateral depths from the borehole wall 10.

With reference again to the Biot article, the relationship between formation permeability and the attenuation of a slow compressional wave propagating in a formation and having a frequency f can be expressed as follows:

$$\alpha = R \, fc^{\frac{1}{2}} \, f^{\frac{1}{2}} \quad , \text{ for } f \gg fc$$

(1)

where $\alpha$ is. an attenuation coefficient, e.g., the ratio of amplitudes of the slow compressional wave at respectively two spaced apart receivers per unit distance assuming plane wave propagation. R is a frequency independent term which is a function of the elastic and inertial properties of the formation which can be determined from the velocity of the compressional, shear and slow compressional waves as well as formation lithology. The expression for fc takes on the following form:

$$fc = \frac{\eta \phi}{2 \, \pi \rho_f k}$$

where $\eta$ is the viscosity of the fluid in the pores in the formation, $\phi$ is the porosity of the formation matrix, is the density of the fluid in the pores of the formation and k is the permeability of the formation.

These relationships are essentially derived from equation (3.7) at page 171; equation (5.7) at page 185 and equation (6.5) at page 190 of the Biot article. Reference may be had to that article for a more complete theoretical analysis of a relationship between permiability of a porous material and the attenuation of a presumed slow compressional wave propagating in that material.

-14-

It will be appreciated that the terms which form equation (1), except for the unknown permeability, can be readily provided from other sources, e.g., other logging tools, or from the system of the present invention, by processing other portions of the received acoustical signals. For example, formation porosity can be determined from the speed of the compressional wave. Therefore, it will be appreciated that equation (1) or an equivalent expression can be solved to determine permeability of a formation from the attenuation of the slow compressional wave propagating in that formation.

It will be understood by those skilled in the art that the above-described embodiment of the invention is intended to be merely exemplary, and that it is susceptible of modification and variation without departing from the spirit and scope of the invention.

WHAT IS CLAIMED IS:

1. A method for investigating a characteristic property of a material, characterized by the steps of:

a. effecting the propagation of a sonic slow compressional wave in said materials;

b. monitoring said material to determine a property of propagation of said slow wave.

2. The method according to claim 1 further characterized by the step of determining a characteristic property of said material from said property of propagation.

3. The method according to claim 1 or 2 characterized in that said step of effecting the propagation of a sonic slow wave in said material includes the steps of:

a. generating acoustic energy; and

b. transmitting said acoustic energy into said material through an acoustic coupling medium having a sonic speed such that the ratio of the sonic speed in the coupling medium to the sonic speed of the acoustic slow wave in the material is less than one.

4. The method according to any one of claims 1-3 characterized in that said step of effecting the propagation of a sonic slow wave in said material includes the steps of:

a. generating acoustic energy; and

b. causing said acoustic energy to enter said material through a critical angle of refraction.

5. The method according to claim 4 characterized in that said critical angle of refraction is a real valued incident angle of excitation.

16

0046101

6. The method according to claim 1 wherein one or more characteristics of an earth formation traversed by a borehole are investigated, said method being characterized in that:

said sonic slow wave is propagated in said formation;

said formation if monitored from said borehole to determine a property of propagation of said sonic slow wave in said formation; and further characterized by the step of

determining a characteristic property of said formation from said property of propagation.

7. The method according to claim 6 characterized in that said step of effecting the propagation of a sonic slow wave in said formation includes the steps of:

a. generating acoustic energy; and

b. transmitting said acoustic energy into said formation through an acoustic coupling medium having a sonic speed such that the ratio of the sonic speed in the coupling medium to the sonic speed of the acoustic slow wave in the formation is less than one.

8. The method according to claim 6 or 7 characterized in that said property of propagation is acoustic attenuation and in that said characteristic property of said formation is permeability.

9. The method according to claim 1 wherein the permeability of earth formations traversed by a borehole and containing a fluid in the pores thereof are investigated, said method being characterized in that: said effecting the propagation of said slow wave comprises positioning a source of sonic excitation at a location adjacent to the surface of the borehole within a formation to be investigated; actuating the source to periodically excite the formation so as to effect the excitation of a critically refracted headwave of a slow compressional wave; and said step of monitoring said material comprises detecting the magnitude of said slow compressional wave; and further characterized by deriving from the magnitude of said slow compressional wave an indication of the permeability of the formation.

10. The method according to claim 9 further characterized by prior to said source positioning step, the steps of: positioning a transmitting medium between the borehole surface and said sonic source, said transmitting medium being such that the ratio of the sonic speed in the transmitting medium to the sonic speed of the headwave in the formation is less than one.

11. The method according to claim 9 or 10 further characterized by the steps of: exciting the formation at a plurality of separate frequencies, measuring the magnitude of said slow compressional wave at said adjacent location and at at least one other location spaced from said adjacent location; and determining the ratio of the magnitude of said slow compressional wave at said other location to the magnitude of said slow compressional wave at said adjacent location for each separate frequency.

12. The method according to claim 11 in which the frequencies at which said sonic source is excited are within the range of from 20 KHz to 5 MHz.

13. The method according to any one of claims 10-12 further characterized by:

measuring with said excitation of said formation the magnitude of said slow compressional wave at the interface between said transmitting medium and said borehole surface; and

determining from the magnitude of said slow compressional wave an indication of the permeability of the formation.

14. An apparatus for investigating a property of a material, characterized by:

a. means for exciting a slow compressional sonic wave to propagate in said material; and

b. means for detecting said slow wave.

15. The apparatus according to claim 14 further characterized by means for determining the attenuation of said slow wave.

16. The apparatus according to claim 14 or 15 characterized in that said means for exciting a slow compressional sonic wave includes a coupling medium for transmitting sonic energy to said material in a manner that excites said slow wave, said coupling medium having the property that the ratio of the sonic speed in said transmitting medium to the sonic speed of the headwave of the slow compressional sonic wave in said material is less than one.

19

0046101

17. The apparatus according to any one of claims 14-16 characterized in that said means for detecting said slow wave comprises a pair of spaced apart acoustic receivers.

18. The apparatus according to claim 17 further characterized by a coupling medium intermediate said acoustic receivers and said material, said coupling medium having the property that the ratio of the sonic speed in said coupling medium to the sonic speed of the headwave of the slow compressional sonic wave in said material is less than one.

19. The apparatus according to claim 18 or 19 characterized in that said acoustic receivers are angled with respect to said material by an angle substantially equal to:

$$\sin^{-1} \left( \frac{\text{speed of slow wave in the coupling medium}}{\text{speed of slow wave in said material.}} \right)$$

20. The apparatus according to claim 14 wherein the permeability of earth formations traversed by a borehole are investigated, said apparatus being characterized in that:

said exciting means comprises:

a source of periodic excitation;

means for positioning the excitation source adjacent to the borehole wall adjacent a formation to be investigated when said apparatus is in a borehole;

means for actuating the source so that when the source is adjacent a formation it is effective to periodically excite a critically refracted headwave of a slow compressional wave in the formation;

said detecting means comprises:

means comprised within said positioning means for detecting said slow compressional wave; and further characterized by

means for determining the attenuation of said slow compressional wave.

21. The apparatus according to claim 20 further characterized by a transmitting medium, comprised within said positioning means such that when the source is adjacent a formation said transmitting medium is between said source and said borehole wall, said transmitting medium being such that the ratio of the sonic speed in said medium to the sonic speed of the headwave in said formation is less than one.

22. The apparatus according to claim 20 or 21 characterized in that said attenuation determining means comprises a pair of spaced apart acoustic receivers.

23. The apparatus according to claim 14 wherein the permeability of earth formations traversed by a borehole are investigated, said apparatus being further characterized by:

a body member sized for passage through a borehole;

a pad device carried on said body member;

a shield covering a portion of said pad device and formed of a material having a sonic velocity of less than 1 km/sec;

means carried on said body member for selectively bringing said pad device into engagement with the surrounding borehole surface when said body member is in a borehole;

and characterized in that said exciting means comprises:

a source of periodic excitation carried on said pad device which mechanical excitation is effective in causing, through said shield, the excitation of a critically refracted headwave of a slow compressional wave in the formation when the source is adjacent a fluid filled porous material; and in that

said detecting means comprises means, carried on said pad device, for detecting said slow compressional wave.

24. The apparatus according to claim 23, characterized in that said actuating means is adapted to effect actuation of the excitation means within a range of frequencies of from 20 KHz to 5 MHz.

25. The apparatus according to claim 20 or 23 characterized in that said detecting means comprises a plurality of transducers arranged in spaced apart relationship about said source.

26. The apparatus according to claim 23 further characterized by means for determining the attenuation of said slow compressional wave.

27. The apparatus according to claim 26 characterized in that said attenuation determining means comprises a pair of spaced apart acoustic receivers.

1/1

FIG.1

FIG.3

AMPLITUDE

A    C D  E  F  G

FIG. 2